# EUROPEAN PATENT SPECIFICATION

(11) **EP 4 228 294 B1**
(45) Date of publication and mention of the grant of the patent: **06.05.2026**
(21) Application number: 22859571.6
(22) Date of filing: 09.09.2022
(51) Int. Cl.: H04W 4/16, H04W 4/80

(54) **CALL FORWARDING METHOD AND TERMINAL DEVICE**
ANRUFWEITERLEITUNGSVERFAHREN UND ENDGERÄTEVORRICHTUNG
PROCÉDÉ DE TRANSFERT D'APPEL ET DISPOSITIF TERMINAL

(30) Priority: 21.12.2021 CN 202111574493
(43) Date of publication of application: 16.08.2023
(60) Divisional application: 26168441.9
(73) Proprietor: Honor Device Co., Ltd., Shenzhen, Guangdong 518040 (CN)
(72) Inventor: CHEN, Jiazi, Shenzhen, Guangdong 518040 (CN); HAN, Jian, Shenzhen, Guangdong 518040 (CN)
(74) Representative: Epping - Hermann - Fischer
(86) International application number: PCT/CN2022/118088
(87) International publication number: WO 2023/116068

(56) References cited:
- WO-A1-2016/184084
- WO-A1-2021/169472
- WO-A1-2021/185244
- CN-A- 105 872 439
- CN-A- 107 708 078
- CN-A- 110 138 937
- CN-A- 113 596 257
- US-A1- 2023 216 990

## Description

### TECHNICAL FIELD

This application relates to the field of terminal technologies, and in particular, to a call transfer method and a terminal device.

### BACKGROUND

With the development of terminal technologies and the wide use of terminals, terminal devices can provide users with various services to satisfy users' daily requirements. When a terminal device provides a user with a call service, if it is inconvenient for the user to make a call on the terminal device, the user may transfer the foregoing call to another terminal device, so as to retain continuity of the call and satisfy user's call requirements. The foregoing terminal devices may be respectively referred to as a main terminal device and an auxiliary terminal device.

However, in the prior art, scenarios applicable to a call transfer between a main terminal device and an auxiliary terminal device are undiversified and not flexible enough, resulting in low call efficiency and poor user experience.

WO 2021/185244 A1 relates to a device interaction method and device. When it is determined that an electronic device is in a video call state, the electronic device may display a dialog box or a control. In response to an operation performed on the dialog box or the control, the electronic device may interact with another device in a same local area network, for example, switch a video call from the electronic device to a smart television, or perform projection on a smart television.

### SUMMARY

The invention is set out in the appended claims.

This application provides a call transfer method and a terminal device, so as to improve flexibility of a call transfer between a main terminal device and an auxiliary terminal device and improve call efficiency and user experience.

According to a first aspect, a call transfer method is provided, which is applied to a system including a main terminal device, a first auxiliary terminal device, where the first auxiliary terminal device is a tablet, a watch, a personal computer, a stereo, a vehicle-mounted terminal device or a large screen, and a second auxiliary terminal device, the main terminal device, the first auxiliary terminal device and the second auxiliary terminal device are connected to a same local area network and log in with a same user account, and the method includes: displaying, by the first auxiliary terminal device, a first window, where the first window is used to display a contact and a call state of a current call, the first window is a displayed window corresponding to a case that the current call is in an answered state, and the first window is used to display a candidate device list in response to the user clicking a call transfer key, wherein the candidate device list displays the main terminal device, the first auxiliary terminal device and the second auxiliary terminal device as candidates; receiving, by the first auxiliary terminal device, a user's operation of choosing the main terminal device or the second auxiliary terminal device as a respective candidate from the candidate list displayed in the first window; and in response to the user's operation of choosing the main terminal device as the respective candidate, sending, by the first auxiliary terminal device, a first call transfer indication message to the main terminal device; and in response to the user's operation of choosing the second auxiliary terminal device as the respective candidate, sending, by the first auxiliary terminal device, a first call transfer indication message to the second auxiliary terminal device; where the first call transfer indication message is used to instruct to transfer the current call.

In this application, when a call is answered on an auxiliary terminal device, a user may click a call transfer key on the auxiliary terminal device, so as to transfer the current call to the foregoing main terminal device to be answered, thereby improving flexibility of a call transfer between the main terminal device and the auxiliary terminal device and improving call efficiency and user experience.

Before the displaying, by the first auxiliary terminal device, a first window, the method further includes: displaying, by the first auxiliary terminal device, a second window, where the second window is a displayed window corresponding to a case that the current call is in an unanswered state, and the second window includes an answer key and a hang-up key; and answering, by the first auxiliary terminal device, the current call, and updating the displayed window from the second window to the first window, in response to a user's operation on the answer key.

According to a second aspect, a terminal device is provided. The terminal device includes: a processor, where the processor is coupled to a memory, and may be configured to execute an instruction in the memory, to implement the method according to any possible implementation of the first aspect. The terminal device further includes the memory.

According to a third aspect, a computer program product is provided. The computer program product includes: a computer program (which may also be referred to as code or an instruction). When run, the computer program causes a computer to perform the method according to any possible implementation of the first aspect.

According to a fourth aspect, a computer-readable storage medium is provided. The computer-readable storage medium stores a computer program (which may also be referred to as code or an instruction). When run on a computer, the computer program causes the computer to perform the method according to any possible implementation of the first aspect.

### BRIEF DESCRIPTION OF DRAWINGS

FIG. 1 is a schematic diagram of an application scenario according to an embodiment of this application;
FIG. 2 is a schematic diagram of a hardware structure of an auxiliary terminal device according to an embodiment of this application;
FIG. 3 is a schematic diagram of a software architecture of a first auxiliary terminal device according to an embodiment of this application;
FIG. 4 is a schematic flowchart of a call transfer method according to an embodiment of this application;
FIG. 5 is a schematic diagram of a tablet computer interface for a call transfer according to an embodiment of this application;
FIG. 6 is a schematic diagram of a mobile phone interface for a call transfer according to an embodiment of this application;
FIG. 7 is a schematic diagram of another mobile phone interface for a call transfer according to an embodiment of this application;
FIG. 8 is a schematic diagram of another tablet computer interface for a call transfer according to an embodiment of this application;
FIG. 9A and FIG. 9B are a schematic diagram of still another tablet computer interface for a call transfer according to an embodiment of this application;
FIG. 10 is a schematic diagram of another mobile phone interface for a call transfer according to an embodiment of this application;
FIG. 11 is a schematic diagram of another tablet computer interface for a call transfer according to an embodiment of this application;
FIG. 12 is a schematic diagram of another mobile phone interface for a call transfer according to an embodiment of this application;
FIG. 13 is a schematic diagram of another mobile phone interface for a call transfer according to an embodiment of this application;
FIG. 14 is a schematic diagram of another tablet computer interface for a call transfer according to an embodiment of this application;
FIG. 15 is a schematic diagram of a notebook computer interface for a call transfer according to an embodiment of this application;
FIG. 16 is a schematic diagram of another notebook computer interface for a call transfer according to an embodiment of this application;
FIG. 17 is a schematic diagram of another tablet computer interface for a call transfer according to an embodiment of this application;
FIG. 18 is a schematic diagram of another notebook computer interface for a call transfer according to an embodiment of this application;
FIG. 19 is a schematic diagram of another mobile phone interface for a call transfer according to an embodiment of this application;
FIG. 20 is a schematic diagram of another notebook computer interface for a call transfer according to an embodiment of this application;
FIG. 21 is a schematic diagram of another tablet computer interface for a call transfer according to an embodiment of this application;
FIG. 22 is a schematic diagram of another tablet computer interface for a call transfer according to an embodiment of this application;
FIG. 23 is a schematic diagram of another mobile phone interface for a call transfer according to an embodiment of this application;
FIG. 24 is a schematic diagram of still another notebook computer interface for a call transfer according to an embodiment of this application.

### DESCRIPTION OF EMBODIMENTS

The following describes technical solutions of this application with reference to accompanying drawings.

With the development of terminal technologies and the wide use of terminals, terminal devices can provide users with various services to satisfy users' daily requirements. When a terminal device provides a user with a call service, if it is inconvenient for the user to make a call on the terminal device, the user may transfer the foregoing call to another terminal device, so as to retain continuity of the call and satisfy user's call requirements. The foregoing terminal devices may be respectively referred to as a main terminal device and an auxiliary terminal device.

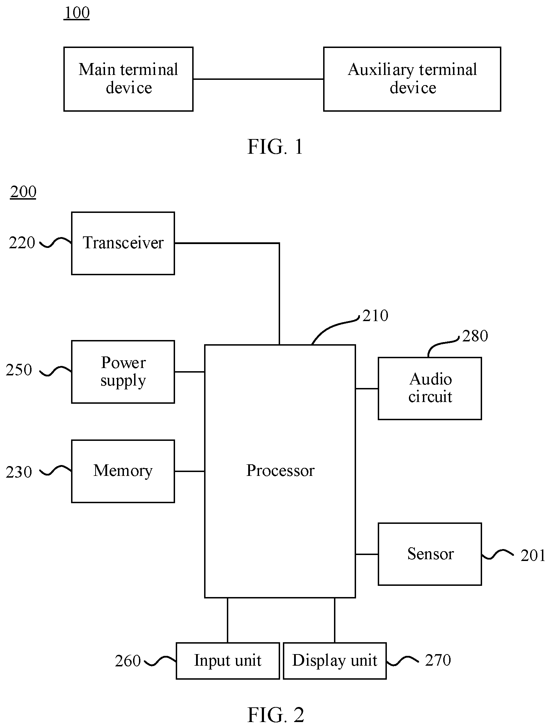

FIG. 1 is a schematic diagram of an application scenario 100 according to an embodiment of this application. The application scenario 100 includes the foregoing main terminal device and the foregoing auxiliary terminal device. When the main terminal device receives a call (an incoming call), a user may answer the call on the main terminal device, or transfer the call to the auxiliary terminal device to be answered. It should be understood that, the foregoing auxiliary terminal device may be one or more, but a call may be transferred to only one auxiliary terminal device to be answered at a time.

However, in the prior art, scenarios applicable to a call transfer between a main terminal device and an auxiliary terminal device are undiversified and not flexible enough, resulting in low call efficiency and poor user experience.

In view of this, embodiments of this application provide a call transfer method and a terminal device. When a call is answered on an auxiliary terminal device, a user may click a call transfer key on the auxiliary terminal device, so as to transfer the current call to the foregoing main terminal device to be answered, thereby improving flexibility of a call transfer between the main terminal device and the auxiliary terminal device and improving call efficiency and user experience.

It should be understood that, the main terminal device and the auxiliary terminal device in the embodiments of this application are connected to a same local area network and log in with a same user account, which may also be understood as that the main terminal device and the auxiliary terminal device are under a trusted ring and within a near-field range of a same local area network, so that common vibration for an incoming call and a call relay between the main terminal device and the auxiliary terminal device can be implemented. The main terminal device is a device for inserting cards, the main terminal device can receive a call from an operator, and the main terminal device may include a mobile phone, a tablet (PAD), a smart watch, or the like. The auxiliary terminal device is a PAD, a watch, a personal computer (personal computer, PC), a stereo, a vehicle-mounted terminal device, or a large screen.

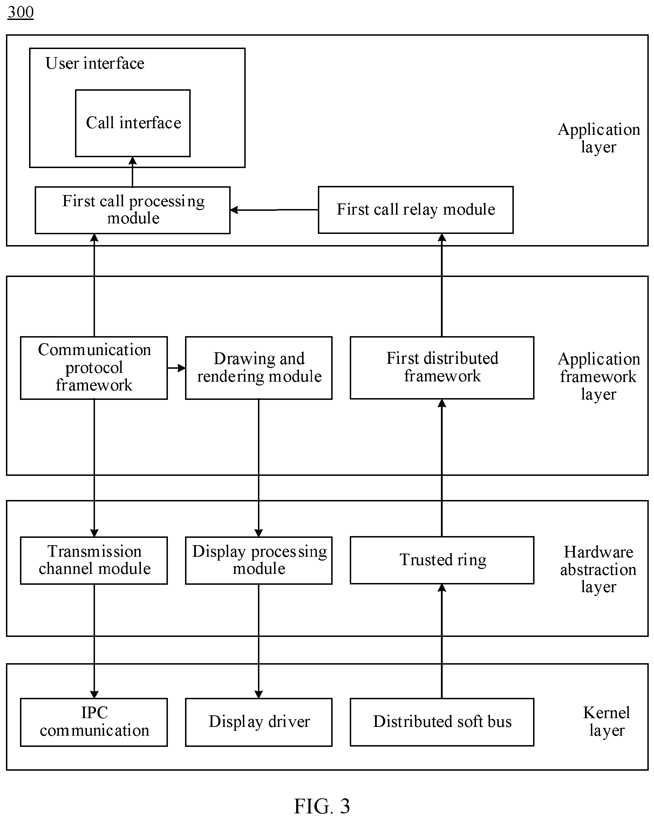

In this application, a hardware structure and a software structure of the main terminal device are similar to those of the auxiliary terminal device. The following describes a hardware structure and a software structure of the auxiliary terminal device mainly with reference to FIG. 2 and FIG. 3. FIG. 2 is a schematic diagram of a hardware structure of an auxiliary terminal device 200 according to an embodiment of this application. As shown in FIG. 2, the auxiliary terminal device includes a processor 210, a transceiver 220, and a display unit 270. The display unit 270 may include a display screen.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a display processing unit (display process unit, DPU), and/or a neural-network processing unit (neural-network processing unit, NPU). Different processing units may be independent components, or may be integrated into one or more processors. In some embodiments, the auxiliary terminal device 200 further includes one or more sensors 210. The processor may be a nerve center and a command center of the auxiliary terminal device 200. The processor may generate an operating control signal according to an instruction operation code and a timing signal, to complete control of fetching and executing an instruction. A memory may be further arranged in the processor 210, and is configured to store instructions and data. In some embodiments, the memory in the processor 210 is a cache. The memory may store an instruction or data that has just been used or cyclically used by the processor 210. If the processor 210 needs to use the instruction or the data again, the processor may directly invoke the instruction or the data from the memory, avoid repeated access, and reduce a waiting time of the processor 210, thereby improving efficiency of the auxiliary terminal device 200.

A memory may be further arranged in the processor 210, and is configured to store a call transfer indication message or call data. In some embodiments, the memory in the processor 210 is a cache. The memory may store an instruction or data that has just been used or cyclically used by the processor 210. If the processor 210 needs to use the instruction or the data again, the processor may directly invoke the instruction or the data from the memory, avoid repeated access, and reduce a waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

The UART interface is a universal serial data bus used for asynchronous communication. The bus may be a two-way communication bus. The bus switches to-be-transmitted data between serial communication and parallel communication. In some embodiments, the UART interface is usually configured to connect the processor 210 to the transceiver 220. For example, the processor 210 communicates with a Bluetooth module in the transceiver 220 through the UART interface, to implement a Bluetooth function. In some embodiments, an audio circuit 280 may transfer an audio signal to the transceiver 220 by using a UART interface, to implement a function of playing music by using a Bluetooth headset.

The MIPI interface may be configured to connect the processor 210 to peripheral devices such as the display unit 170. The MIPI interface includes a camera serial interface (camera serial interface, CSI), a display serial interface (display serial interface, DSI), and the like. In some embodiments, the processor 210 communicates with the display unit 270 by using a DSI interface, to implement a display function of the auxiliary terminal device.

The GPIO interface may be configured through software. The GPIO interface may either be configured as a control signal or a data signal. In some embodiments, the GPIO interface may be configured to connect the processor 210 to the display unit 270, the transceiver 220, the audio circuit 280, a sensor 201, and the like. The GPIO interface may also be configured as an I2C interface, an I2S interface, a UART interface, an MIPI interface, and the like.

It may be understood that a schematic interface connection relationship between the modules in this embodiment of this application is merely an example for description, and constitutes no limitation on the structure of the auxiliary terminal device. In some other embodiments of this application, the auxiliary terminal device may alternatively use an interface connection manner different from that in the foregoing embodiment, or use a combination of a plurality of interface connection manners.

The transceiver 220 may provide a solution for wireless communication including a wireless local area network (wireless local area network, WLAN) (such as a wireless fidelity (wireless fidelity, Wi-Fi) network), Bluetooth (Bluetooth, BT), and a global navigation satellite system (global navigation satellite system, GNSS), frequency modulation (frequency modulation, FM), a near field communication (near field communication, NFC) technology, an infrared (infrared, IR) technology, and the like to be applied to the auxiliary terminal device. The transceiver 220 may be one or more components into which at least one communication processing module is integrated. The display unit 270 may be configured to display a call interface according to this application. The display unit 270 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diodes (quantum dot light emitting diodes, QLED), and the like. In some embodiments, the auxiliary terminal device may include one or N display units 270. N is a positive integer greater than 1.

Optionally, the auxiliary terminal device may further include a memory 230. The processor 210, the transceiver 220, and the memory 230 may communicate with each other by using an internal connection path, to transmit, process, and/or store call data or a call transfer indication message.

The memory 230 may be configured to store a computer executable program code, where the executable program code includes an instruction. The memory 230 may include a program storage area and a data storage area. The program storage area may store an operating system, an application required by at least one function (for example, a sound playing function or an image playing function), and the like. The data storage region may store data (for example, call data) and the like created when the auxiliary terminal device is used. In addition, the memory 230 may include a high-speed random access memory, and may also include a non-volatile memory, for example, at least one magnetic disk storage device, a flash memory device, or a universal flash storage (universal flash storage, UFS), and the like. The processor 210 runs the instructions stored in the internal memory 230 and/or the instructions stored in the memory arranged in the processor, to implement various functional applications and data processing of the auxiliary terminal device. Optionally, to improve a function of the auxiliary terminal device, the auxiliary terminal device may further include one or more of an input unit 260, the audio circuit 280, and the sensor 201. Optionally, the foregoing auxiliary terminal device may further include a power supply 250 that is configured to supply power to the various components or circuits in the auxiliary terminal device. It may be understood that, the power supply 250 shown in FIG. 2 is configured to supply power to the processor 210, the memory 230, the display unit 270, a camera 290, the input unit 260, the transceiver 220, and the like.

Optionally, the auxiliary terminal device may implement an audio function, for example, playing a call voice, an incoming call ringtone, or the like, by using the audio circuit 280 and the application processor.

It may be understood that the schematic structure in this embodiment of this application constitutes no specific limitation on the auxiliary terminal device 200. In some other embodiments of this application, the auxiliary terminal device 200 may include more or fewer components than those shown in the figure, or some components may be combined, or some components may be split, or components are arranged in different manners. The components shown in the figure may be implemented by hardware, software, or a combination thereof.

A software system of the auxiliary terminal device 200 may use a layered architecture, an event-driven architecture, a microkernel architecture, a micro service architecture, or a cloud architecture.

In this embodiment of this application, the software structure of the auxiliary terminal device 200 is exemplarily described by using an Android system with a layered architecture as an example. FIG. 3 is a schematic diagram of a software structure of an auxiliary terminal device 300 according to an embodiment of this application. As shown in FIG. 3, the auxiliary terminal device may include an application layer, an application framework layer, a hardware abstraction layer, and a kernel layer. The application layer includes a first call processing module, a first call relay module, and a user interface (user interface, UI). The application framework layer includes a communication protocol framework, a drawing and rendering module, and a first distributed framework. The hardware abstraction layer (hardware abstraction layer, HAL) includes a transmission channel module, a display processing module, and a trusted ring. The kernel layer (kernel) includes inter-process communication (inter-process communication, IPC), a display driver, and a distributed soft bus.

The first call processing module is used by the auxiliary terminal device to display a call interface. For example, based on the communication protocol framework, because the auxiliary terminal device may implement IPC communication by using the transmission channel module, the auxiliary terminal device may render the call interface by using the drawing and rendering module and invoke the display driver by using the first display processing module, and then may display a call request interface (an incoming call interface), the call interface (an interface for a connected incoming call), and a call transfer interface by using the first processing module.

The first distributed framework is configured to receive, from a main terminal device, information used to indicate a call state (such as hang-up of a call) of the main terminal device or a call transfer indication message (that is, transferring the call from the auxiliary terminal device to the main terminal device), so that the auxiliary terminal device can update the call interface or hang up the call based on the information or the indication message; or the first distributed framework is configured to send, to the main terminal device, information used to indicate a call state of the auxiliary terminal device or a call transfer indication message, so that the auxiliary terminal device can update the call interface or hang up the call based on the information or the indication message. The auxiliary terminal device may further search for the main terminal device and a plurality of other auxiliary terminal devices under the trusted ring based on the distributed soft bus, then may find the main terminal device and the plurality of other auxiliary terminal devices based on the first distributed framework, and may display a list including the main terminal device and the plurality of other auxiliary terminal devices by using the first call processing module.

For ease of describing the technical solutions in the embodiments of this application clearly, in the embodiments of this application, terms such as "first" and "second" are used to distinguish same or similar items with a basically same function and role. For example, a first call transfer indication message and a second call transfer indication message are merely used to distinguish between different call transfer indication messages, and are not intended to limit a sequence thereof. A person skilled in the art may understand that the terms "first", "second", and the like, and do not limit a quantity and an execution order, and the terms "first", "second", and the like are not limited to be necessarily different.

It should be noted that, in this application, the term "exemplarily" or "for example" is used to represent giving an example, an illustration, or a description. Any embodiment or design scheme described as an " exemplarily " or "for example" in the embodiments of this application should not be explained as being more preferable or more advantageous than another embodiment or design scheme. Exactly, use of the term "exemplarily" or "for example" or the like is intended to present a related concept in a specific manner.

In addition, "at least one" means one or more and "a plurality of" means two or more. The term and/or describes an association relationship for describing associated objects and represents that three relationships may exist. For example, A and/or B may represent: only A exists, both A and B exist, and only B exists, where A and B may be singular or plural. The character "/" generally indicates an "or" relationship between the associated objects. "At least one of the following items" or a similar expression means any combination of these items, including a single item or any combination of a plurality of items. For example, at least one of a, b, and c may represent: a, b, c, a and b, a and c, b and c, or a, b, and c, where a, b, and c may be singular or plural.

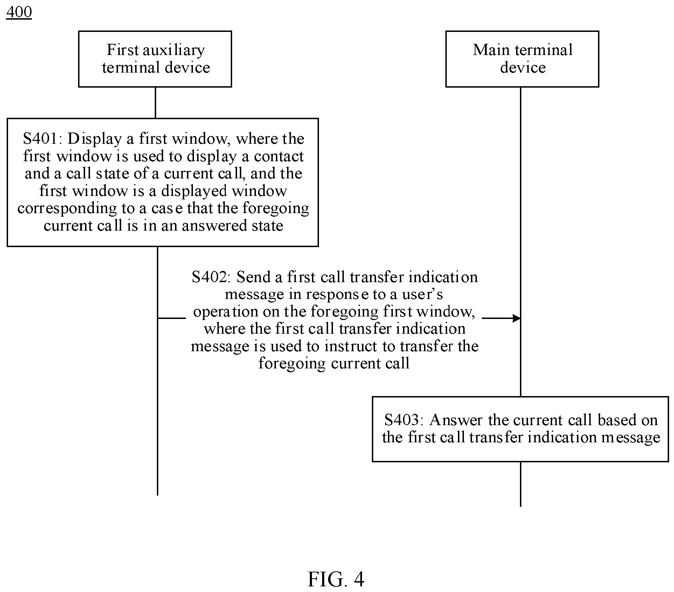

FIG. 4 is a schematic flowchart of a call transfer method 400 according to an embodiment of this application. The method 400 may be applicable to the foregoing application scenario 100 shown in FIG. 1, and may be further applicable to another application scenario. This is not limited in this embodiment of this application. The method 400 may be applied to a system including a main terminal device and a first auxiliary terminal device, where the main terminal device and the first auxiliary terminal device are connected to a same local area network and log in with a same user account. As shown in FIG. 4, the method 400 includes the following steps:
S401: The first auxiliary terminal device displays a first window, where the first window is used to display a contact and a call state of a current call, and the first window is a displayed window corresponding to a case that the foregoing current call is in an answered state.

Exemplarily, before the first auxiliary terminal device displays the first window, the first auxiliary terminal device and the main terminal device are connected by using a Bluetooth technology and/or a near field communication (near field communication, NFC) technology, and are both connected to the same Wi-Fi.

S402: The first auxiliary terminal device sends a first call transfer indication message to the foregoing main terminal device in response to a user's operation on the foregoing first window, where the first call transfer indication message is used to instruct to transfer the foregoing current call. Correspondingly, the main terminal device receives the first call transfer indication message from the first auxiliary terminal device.

It should be understood that the foregoing first call transfer indication message is used to instruct to transfer the current call from a current terminal device (that is, the foregoing first auxiliary terminal device) to another terminal device.

In a possible implementation, the first window includes a call transfer key and a hang-up key. The first auxiliary terminal device may display a candidate device list in response to the user's operation on the call transfer key, where the candidate device list includes a device that is located in a same local area network and logs in with a same user account with the first auxiliary terminal device. The first auxiliary terminal device sends the first call transfer indication message to the main terminal device in response to a user's operation of choosing a main terminal device from the candidate device list.

S403: The main terminal device answers the current call based on the first call transfer indication message.

In this embodiment of this application, when a call is answered on the auxiliary terminal device, a user may click a call transfer key on the auxiliary terminal device, so as to transfer the current call to the foregoing main terminal device to be answered, thereby improving flexibility of a call transfer between the main terminal device and the auxiliary terminal device and improving call efficiency and user experience.

The following specifically describes the call transfer method according to this application in different scenarios by using an example in which the main terminal device is a mobile phone and the first auxiliary terminal device is a tablet computer.

Scenario 1: A call is transferred from a tablet computer to a mobile phone.

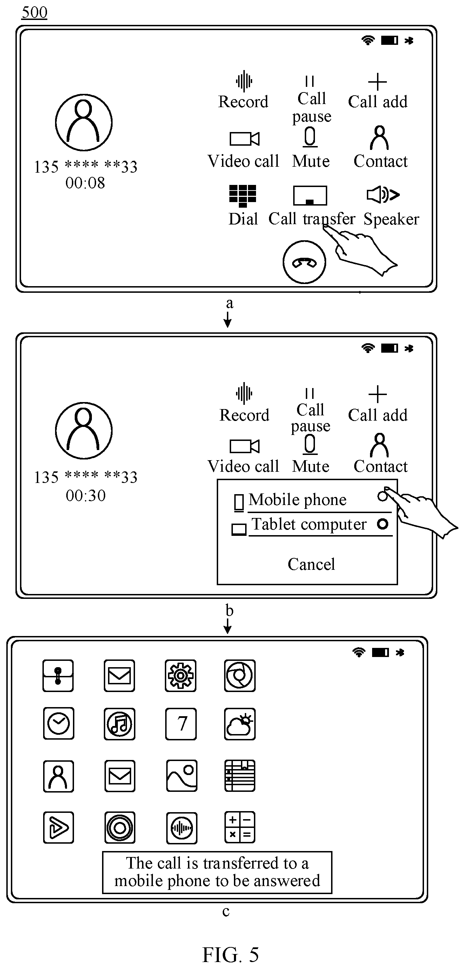

FIG. 5 shows a tablet computer interface 500 for a call transfer. As shown in FIG. 5, a current call is answered on the tablet computer. A tablet computer interface a (that is, the foregoing first window) in FIG. 5 is an interface corresponding to a case that the current call is in an answered state, and the interface displays a contact and a call state of the current call for a user and further provides a call transfer key, a hang-up key, a record key, a call pause key, a call add key, a video call key, a mute key, a contact key, a dial key, and a speaker key. As shown in the tablet computer interface a in FIG. 5, an icon of the call transfer key is displayed as an icon corresponding to the tablet computer indicating that the current call is answered on the tablet computer.

As shown in the tablet computer interface a in FIG. 5, a user may click the call transfer key, and the tablet computer may acquire, in response to a user's click operation on the call transfer key, an instruction for displaying a candidate device list, and display the candidate device list in response to the instruction. As shown in a tablet computer interface b in FIG. 5, the candidate device list displays a mobile phone that is located in a same local area network and logs in with a same user account with the tablet computer, and currently, the tablet computer is in a selected state indicating that the current call is answered on the tablet computer.

As shown in the tablet computer interface b in FIG. 5, a user may click a choosing key (that is, a circular icon) for the mobile phone in the candidate device list, and the tablet computer sends the first call transfer indication message to the mobile phone and displays an interface before the call is answered (for example, a desktop of the tablet computer), in response to a user's click operation on the choosing key for the mobile phone. As shown in a tablet computer interface c in FIG. 5, the interface further displays a prompt bar indicating that "the call is transferred to a mobile phone to be answered".

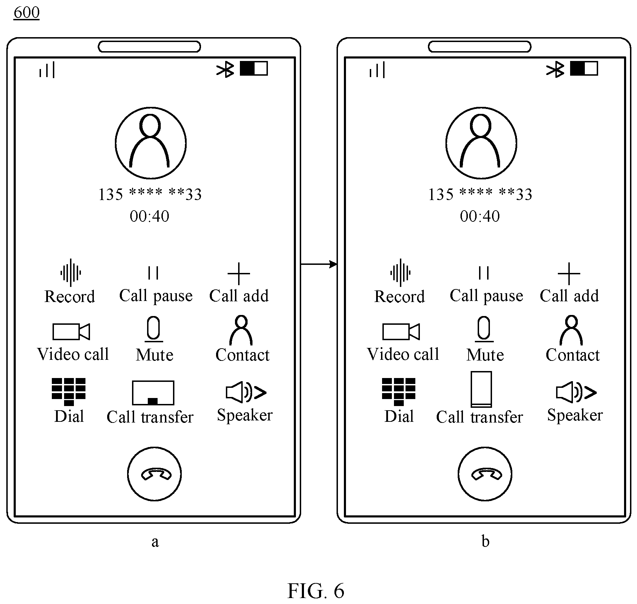

Correspondingly, the mobile phone may answer the current call based on the first call transfer indication message from the tablet computer. FIG. 6 is a mobile phone interface 600 for a call transfer. **In** a case that the current call is answered on the tablet computer (that is, the tablet computer interface a in FIG. 5), the mobile phone may synchronously display a call interface. As shown in a mobile phone interface a in FIG. 6, the interface displays a contact and a call state of the current call for a user, and further provides a call transfer key, a hang-up key, a record key, a call pause key, a call add key, a video call key, a mute key, a contact key, a dial key, and a speaker key. An icon of the call transfer key is displayed as an icon corresponding to the tablet computer indicating that the current call is answered on the tablet computer. When the mobile phone receives the first call transfer indication message from the tablet computer, the mobile phone may answer the current call and change the display icon of the call transfer key. As shown in a mobile phone interface b in FIG. 6, the icon of the call transfer key in the interface is displayed as an icon of the mobile phone indicating that the current call is transferred to the mobile phone to be answered.

It should be understood that, before the current call is answered on the tablet computer, the current call may be connected and answered on the mobile phone first and then be transferred to the tablet computer to be answered.

Scenario 2: A call is transferred from a mobile phone to a tablet computer.

In this scenario, a user may perform a transfer operation on the mobile phone, or perform a transfer operation on the tablet computer. This is not limited in this embodiment of this application.

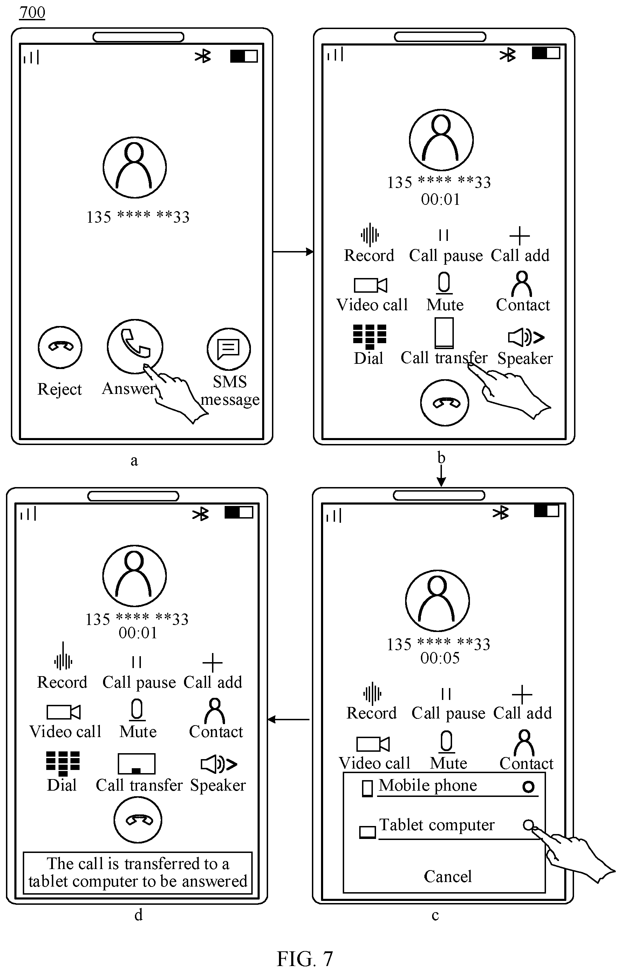

In a possible implementation, a user may perform an operation on the mobile phone: connecting to the current call on the mobile phone first and then transferring the current call to the tablet computer to be answered. FIG. 7 shows another mobile phone interface 700 for a call transfer. The mobile phone may display an interface requested by a call (which may also be referred to as a window requested by a call or an incoming call interface) when receiving a call. As shown in a mobile phone interface a in FIG. 7, the mobile phone interface a displays a contact and a call state of the current call for a user and further provides a reject key, an answer key, and an SMS message key.

As shown in the mobile phone interface a in FIG. 7, a user may click the answer key, and the mobile phone acquires, in response to a user's click operation on the answer key, an instruction for connecting to the call, connects to the call in response to the instruction, and displays a call interface. As shown in a mobile phone interface b in FIG. 7, the call interface displays a contact and a call state of the current call for a user, and further provides the user with a call transfer key, a hang-up key, a record key, a call pause key, a call add key, a video call key, a mute key, a contact key, a dial key, and a speaker key. An icon of the call transfer key is displayed as an icon corresponding to the mobile phone indicating that the current call is answered on the mobile phone. As shown in the mobile phone interface b in FIG. 7, a user may click the call transfer key, and the mobile phone may acquire, in response to a user's click operation on the call transfer key, an instruction for displaying a candidate device list, and display the candidate device list in response to the instruction.

As shown in a tablet computer interface c in FIG. 7, the candidate device list displays a tablet computer that is located in a same local area network and logs in with a same user account with the mobile phone, and currently, the mobile phone is in a selected state indicating that the current call is answered on the mobile phone.

As shown in the mobile phone interface c in FIG. 7, a user may click a choosing key (that is, a circular icon) for the tablet computer in the candidate device list, and the mobile phone sends the first call transfer indication message to the tablet computer and adjusts the icon of the call transfer key, in response to a user's click operation on the choosing key for the tablet computer. As shown in a mobile phone interface d in FIG. 7, the mobile phone displays the icon of the call transfer key as an icon corresponding to the tablet computer, and displays a prompt bar indicating that "the call is transferred to a tablet computer to be answered" on the mobile phone interface d.

Optionally, when there is a terminal device that is located in a same local area network and logs in with a same user account with the mobile phone, a user may enable, according to a self-requirement, the mobile phone to directly display the candidate device list on the call interface, so as to avoid a user's click operation on the call transfer key. As shown in the mobile phone interface a in FIG. 7, in a case that a user may click the answer key, and the mobile phone connects to the current call, the mobile phone directly displays the candidate device list. As shown in the mobile phone interface c in FIG. 7, a user may learn, by the candidate device list on the interface directly, terminal devices to which the current call may be transferred, and may click a choosing key (that is, a circular icon) for any other terminal device (such as a tablet computer) in the candidate device list. In response to a user's click operation on the choosing key for the tablet computer, the mobile phone sends the first call transfer indication message to the tablet computer and displays the mobile phone interface d in FIG. 7.

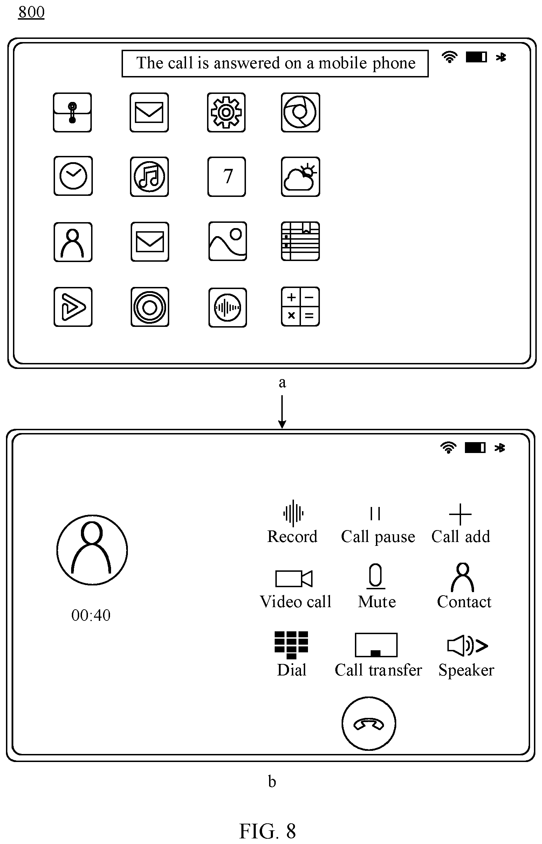

Correspondingly, the tablet computer may answer the current call based on the first call transfer indication message from the mobile phone. FIG. 8 shows another tablet computer interface 800 for a call transfer. As shown in a tablet computer interface a in FIG. 8, in a case that the mobile phone answers the call (that is, the mobile phone interface b in FIG. 7), the tablet computer may display a prompt bar (that is, a third window) indicating that "the call is answered on the mobile phone" on a current interface thereof (such as a desktop). In a case that a user clicks the choosing key for the tablet computer (that is, the mobile phone interface c in FIG. 7), the tablet computer may receive the first call transfer indication message from the mobile phone, answer the current call based on the first call transfer indication message, and display a call interface. As shown in a tablet computer interface b in FIG. 8, the interface displays a contact and a call state of the current call for a user, and further provides a call transfer key, a hang-up key, a record key, a call pause key, a call add key, a video call key, a mute key, a contact key, a dial key, and a speaker key. An icon of the call transfer key is displayed as an icon corresponding to the tablet computer indicating that the current call is transferred to the tablet computer to be answered.

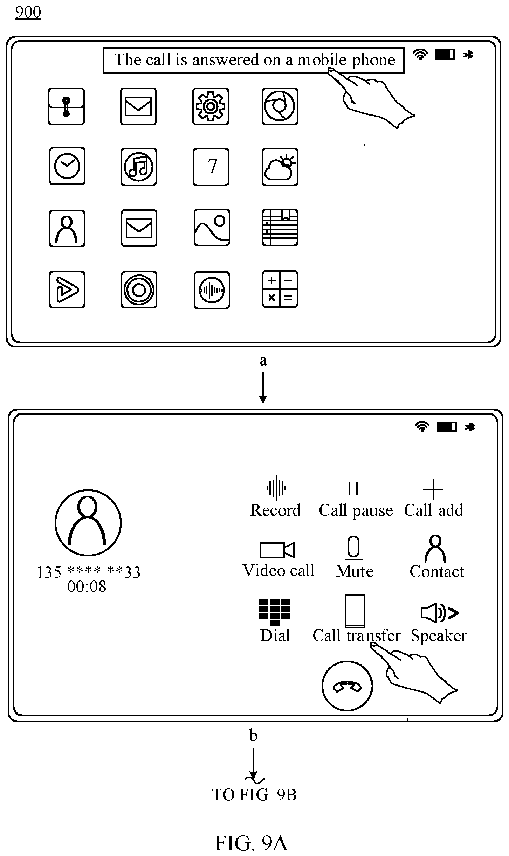

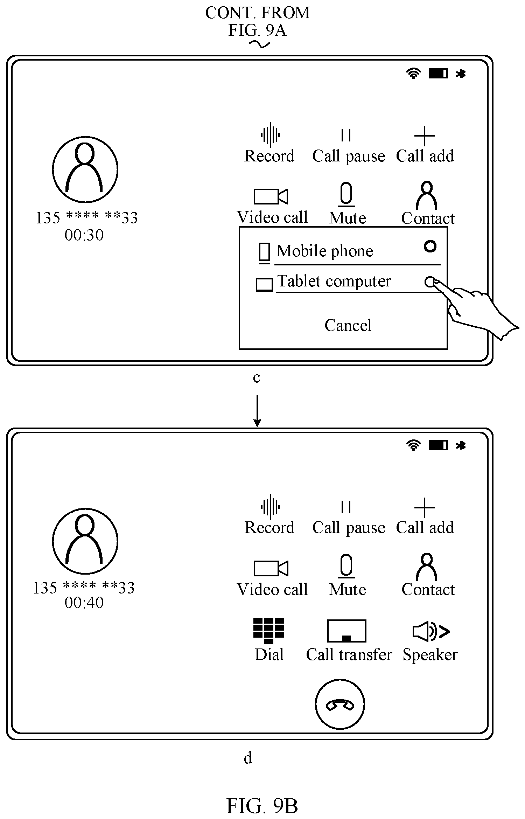

In another possible implementation, a user may transfer, by an operation on the tablet computer, the current call answered on the mobile phone to the tablet computer to be answered. FIG. 9A and FIG. 9B show another tablet computer interface 900 for a call transfer. The call is answered on the mobile phone, and the tablet computer may display a call prompt on a current interface thereof (such as a desktop). As shown in a mobile phone interface a in FIG. 9A andFIG. 9B, the current interface of the tablet computer is a desktop, and a prompt bar indicating that "the call is answered on a mobile phone" is displayed on the desktop.

As shown in the mobile phone interface a in FIG. 9A and FIG. 9B, a user may click the prompt bar indicating that "the call is answered on a mobile phone", and the tablet computer synchronously displays a call interface in response to a user's click operation on the prompt bar indicating that "the call is answered on a mobile phone". As shown in a mobile phone interface b in FIG. 9A and FIG. 9B, the call interface displays a contact and a call state of the current call for a user, and further provides a call transfer key, a hang-up key, a record key, a call pause key, a call add key, a video call key, a mute key, a contact key, a dial key, and a speaker key. An icon of the call transfer key is displayed as an icon corresponding to the mobile phone indicating that the current call is answered on the mobile phone.

As shown in the mobile phone interface b in FIG. 9A and FIG. 9B, a user may click the call transfer key, and the tablet computer acquires, in response to a user's click operation on the call transfer key, an instruction for displaying a candidate device list, and displays the candidate device list in response to the instruction. As shown in a tablet computer interface c in FIG. 9A and FIG. 9B, the candidate device list displays a mobile phone that is located in a same local area network and logs in with a same user account with the tablet computer, and currently, the mobile phone is in a selected state indicating that the current call is answered on the mobile phone.

As shown in the tablet computer interface c in FIG. 9A and FIG. 9B, a user may click a choosing key for the tablet computer in the device list, and the tablet computer sends a second call transfer indication message to the mobile phone in response to a user's click operation on the choosing key for the tablet computer, where the second call transfer indication message is used to instruct to transfer the current call to the tablet computer. When receiving call data sent from the mobile phone, the tablet computer may answer the current call and change the icon of the call transfer key. As shown in a mobile phone interface d in FIG. 9A and FIG. 9B, the icon of the call transfer key in the call interface is displayed as an icon of the tablet computer indicating that the current call is transferred to the tablet computer to be answered.

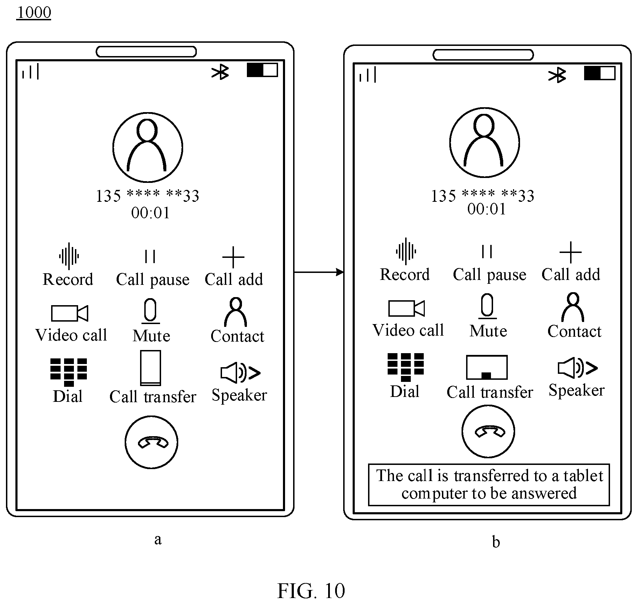

Correspondingly, when receiving the second call transfer indication message from the tablet computer, the mobile phone may transfer the current call to the tablet computer to be answered. FIG. 10 shows another mobile phone interface 1000 for a call transfer. In a case that the tablet computer sends the second call transfer indication message to the mobile phone (that is, the interface c in FIG. 9A and FIG. 9B), the mobile phone may send data of the current call to the tablet computer and change the icon of the call transfer key in the current call interface. As shown in a mobile phone interface b in FIG. 10, the icon of the call transfer key in the interface is an icon corresponding to the tablet computer indicating that the current call is transferred to the tablet computer to be answered. Optionally, the interface may further display a prompt bar indicating that "the call is transferred to a tablet computer to be answered".

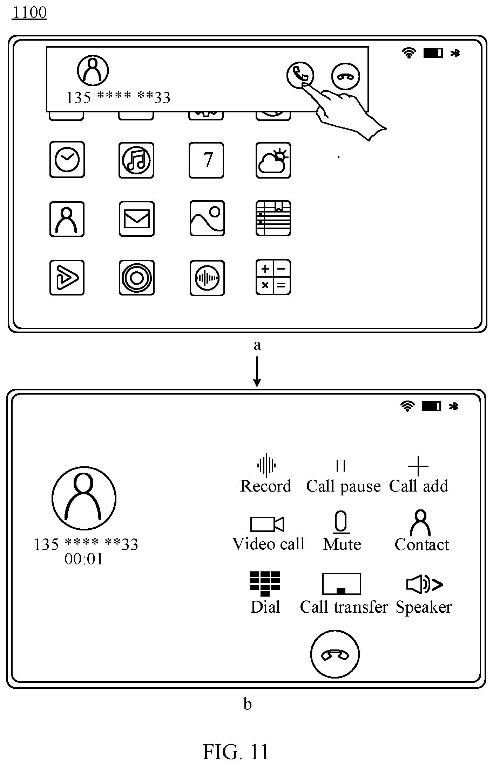

The foregoing FIG. 7 to FIG. 10 show transferring interface diagrams in which the call is in an answered state. If the call is in an unanswered state, a user may answer the call on the tablet computer by an operation on the tablet computer. FIG. 11 shows another tablet computer interface 1100 for a call transfer. When the mobile phone receives a call, the tablet computer may synchronously display a notification bar (that is, a second window) requested by a call. As shown in a tablet computer interface a in FIG. 11, the notification bar requested by the call displays a contact and a call state of the current call for a user and further provides an answer key and a reject key.

As shown in the tablet computer interface a in FIG. 11, a user may click the answer key, and the

tablet computer acquires, in response to a user's click operation on the answer key, an instruction for answering the current call, answers the call in response to the instruction, and displays a call interface. As shown in a tablet computer interface b in FIG. 11, the call interface displays a contact and a call state of the current call for a user, and further provides the user with a call transfer key, a hang-up key, a record key, a call pause key, a call add key, a video call key, a mute key, a contact key, a dial key, and a speaker key. An icon of the call transfer key is displayed as an icon corresponding to the tablet computer indicating that the current call is answered on the tablet computer.

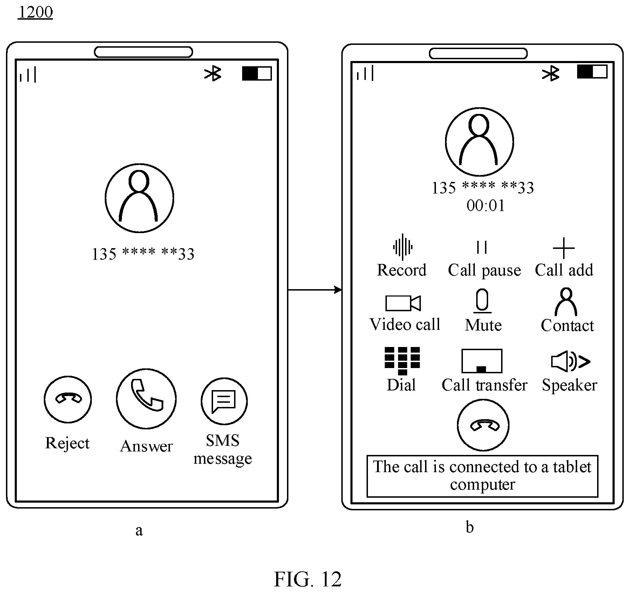

Correspondingly, FIG. 12 shows another mobile phone interface 1200 for a call transfer. A mobile phone may display an interface requested by a call when receiving the call request. As shown in a mobile phone a in FIG. 12, the call interface displays a contact and a call state of the current call for a user and further provides an answer key, a hang-up key, and an SMS message key. When the tablet computer answers the call, the mobile phone may synchronously display a call interface. As shown in a mobile phone interface b in FIG. 12, the interface displays a contact and a call state of the current call for a user, and further provides a call transfer key, a hang-up key, a record key, a call pause key, a call add key, a video call key, a mute key, a contact key, a dial key, and a speaker key. An icon of the call transfer key is displayed as an icon corresponding to the tablet computer indicating that the current call is answered on the tablet computer mobile phone. In addition, the interface may further display a prompt bar indicating that "the call is connected to a tablet computer".

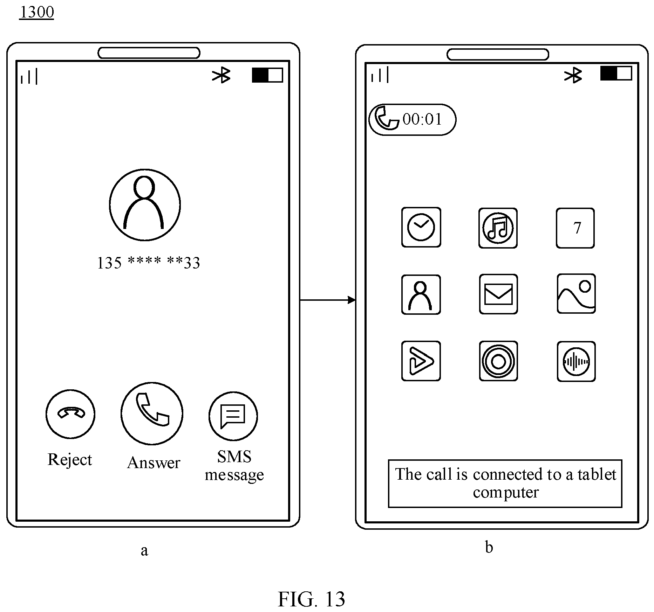

Optionally, when the current call is connected or answered on the tablet computer, in addition to displaying information of the current call by a full-screen interface (such as the mobile phone interface d in FIG. 7, the mobile phone interface b in FIG. 10, and the mobile phone interface b in FIG. 12), the mobile phone may further display the information of the current call in other forms. FIG. 12 shows another mobile phone interface 1300 for a call transfer. As shown in FIG. 13, the mobile phone interface 1300 includes a mobile phone interface a and a mobile phone interface b, where the mobile phone interface a is the same as the mobile phone interface a in FIG. 12. To avoid repetition, details are not described herein again. When the current call is connected or answered on the tablet computer, the mobile phone may return the call to a background and display call information on a current interface of the mobile phone in the form of a small icon (such as a capsule-shaped icon). As shown in the mobile phone interface b in FIG. 13, the capsule-shaped icon is displayed in the top left corner of the mobile phone, and the interface displays a prompt indicating that "the call is connected to the tablet computer".

Optionally, if no user's operation on the mobile phone interface b in FIG. 13 is detected within a time t, the mobile phone may choose to perform a screen-off operation to reduce power consumption of the mobile phone.

It should be understood that, the time t may be set by a user according to a self-requirement, or may be set before the mobile phone leaves a factory. This is not limited in this application.

The system further includes a second auxiliary terminal device, where the second auxiliary terminal device, the main terminal device, and the first auxiliary terminal device are connected to a same local area network and log in with a same user account. In response to a user's operation on the first window, the first auxiliary terminal device may further send the first call transfer indication message to the second auxiliary terminal device, to transfer the call to the second auxiliary terminal device.

The following specifically describes the call transfer method according to this application by using an example in which the main terminal device is a mobile phone, the first auxiliary terminal device is a tablet computer, and the second auxiliary terminal device is a notebook computer.

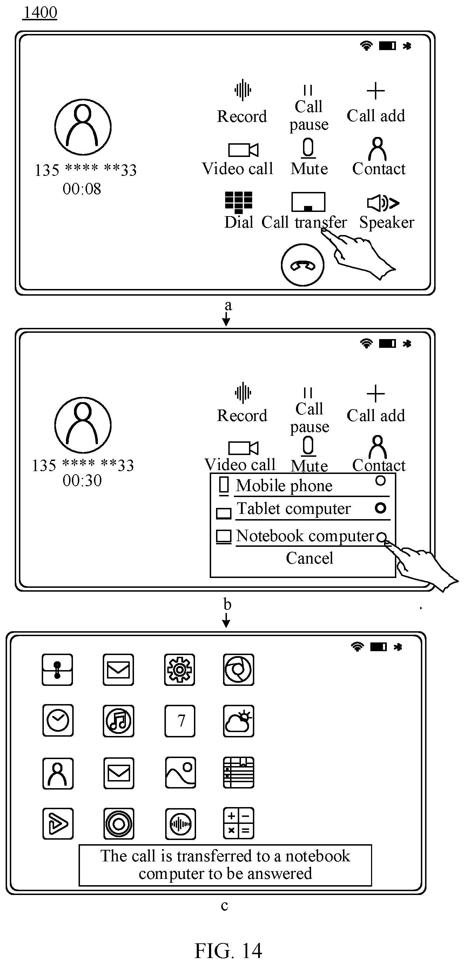

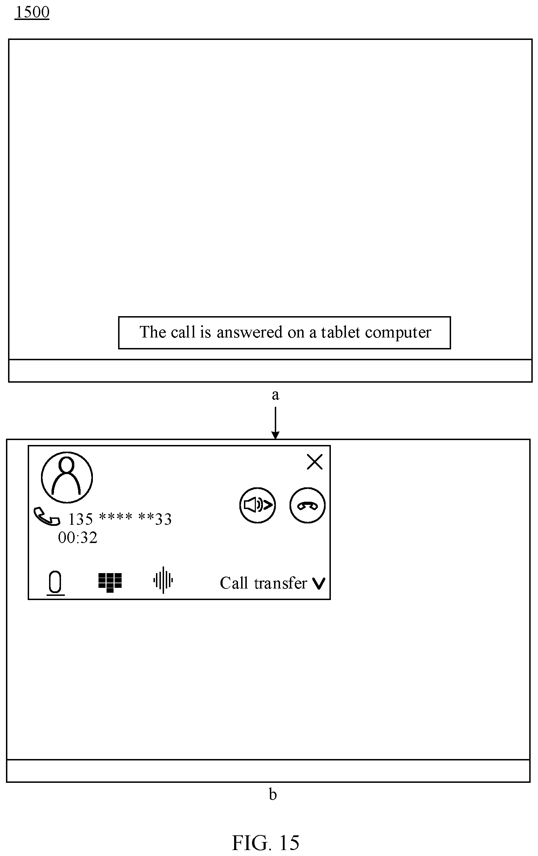

In a scenario in which the current call is answered on the tablet computer, a user may perform an operation on the tablet computer to transfer the current call to another device to be answered, where the another device may be the mobile phone, or may be the notebook computer. The following describes the call transfer method according to this application by using an example of transferring the current call to the notebook computer with reference to FIG. 14 and FIG. 15.

In this scenario, a user may perform a transfer operation on the tablet computer, or perform a transfer operation on the notebook computer. This is not limited in this embodiment of this application.

In a possible implementation, a user may transfer, by performing an operation on the tablet computer, the current call to the notebook computer to be answered. FIG. 14 shows another tablet computer interface 1400 for a call transfer. The current call is answered on the tablet computer, and the tablet computer may display an interface of answering a call. As shown in a tablet computer interface a (that is, the foregoing first window) in FIG. 14, the interface displays a contact and a call state of the current call for a user, and further provides a call transfer key, a hang-up key, a record key, a call pause key, a call add key, a video call key, a mute key, a contact key, a dial key, and a speaker key. An icon of the call transfer key is displayed as an icon corresponding to the

tablet computer indicating that the current call is answered on the tablet computer.

As shown in the tablet computer interface a in FIG. 14, a user may click the call transfer key, and the tablet computer acquires, in response to a user's click operation on the call transfer key, an instruction for displaying a candidate device list, and displays the candidate device list in response to the instruction. As shown in a tablet computer interface b in FIG. 14, the candidate device list displays a mobile phone and a notebook computer that are located in a same local area network and log in with a same user account with the tablet computer, and currently, the tablet computer is in a selected state indicating that the current call is answered on the tablet computer.

As shown in the tablet computer interface b in FIG. 14, a user may click a choosing key (that is, a circular icon) for the notebook computer in the candidate device list, and the tablet computer sends the first call transfer indication message to the notebook computer and displays an interface before the call is answered (for example, a desktop of the tablet computer), in response to a user's click operation on the choosing key for the notebook computer. As shown in a tablet computer interface c in FIG. 14, the interface further displays a prompt bar indicating that "the call is transferred to a notebook computer to be answered".

Correspondingly, the notebook computer receives the first call transfer indication message from the tablet computer and answers the current call. FIG. 15 shows a notebook computer interface 1500 for a call transfer. As shown in a notebook computer interface a in FIG. 15, when the current call is answered on the tablet computer, the notebook computer displays a prompt box indicating that "the call is answered on a tablet computer" on a current interface thereof. When the tablet computer sends the first call transfer indication message to the notebook computer, the notebook computer may answer the current call and display a call interface. As shown in a notebook computer interface b in FIG. 15, the interface displays a contact and a call state of the current call for a user, and further provides a call transfer key, a hang-up key, a record key, a call pause key, a mute key, a dial key, and a speaker key. An icon of the call transfer key is displayed as an icon corresponding to the notebook computer indicating that the current call is transferred to the notebook computer to be answered.

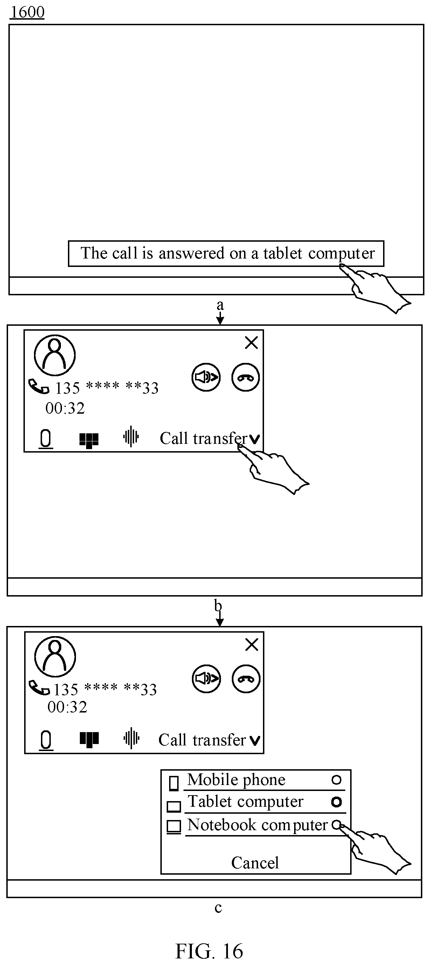

In another possible implementation, a user may transfer, by performing an operation on the notebook computer, the current call to the notebook computer to be answered. FIG. 16 shows another notebook computer interface 1600 for a call transfer. The current call is answered on the tablet computer, and the notebook computer may display an interface of a call prompt on a current interface thereof. As shown in a notebook computer interface a in FIG. 16, the interface displays a prompt box indicating that "the call is answered on a tablet computer".

As shown in the notebook computer interface a in FIG. 16, a user may click the prompt box indicating that "the call is answered on a tablet computer", and the notebook computer acquires, in response to a user's click operation on the prompt box indicating that "the call is answered on a tablet computer", an instruction for displaying the call interface, and displays the call interface in response to the instruction. As shown in a notebook computer interface b in FIG. 16, the interface displays a contact and a call state of the current call for a user, and further provides a call transfer key, a hang-up key, a record key, a call pause key, a mute key, a dial key, and a speaker key.

As shown in the notebook computer interface b in FIG. 16, a user may click the call transfer key, and the notebook computer acquires, in response to a user's click operation on the call transfer key, an instruction for displaying a candidate device list, and displays the candidate device list in response to the instruction. As shown in a notebook computer interface c in FIG. 16, the candidate device list displays a mobile phone and a tablet computer that are located in a same local area network and log in with a same user account with the notebook computer, and currently, the tablet computer is in a selected state indicating that the current call is answered on the tablet computer. As shown in the notebook computer interface c in FIG. 16, a user may click a choosing key for the notebook computer, and the notebook computer sends a second call transfer indication message to the tablet computer in response to a user's click operation on the choosing key for the notebook computer, and answers the current call when receiving call data from the tablet computer.

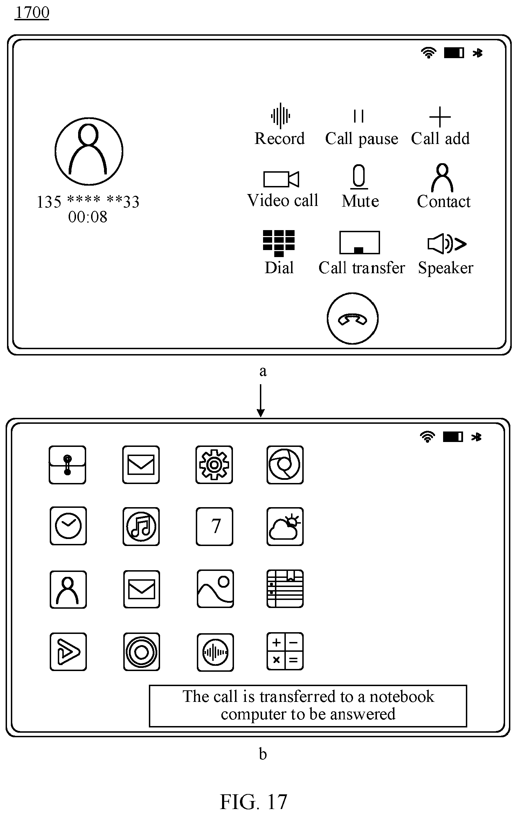

Correspondingly, the tablet computer may receive the second call transfer indication message from the notebook computer and send data of the current call to the notebook computer. FIG. 17 shows another tablet computer interface 1700 for a call transfer. In a case that the tablet computer answers the current call, the tablet computer may display a call interface. As shown in a tablet computer interface a in FIG. 17, the interface displays a contact and a call state of the current call for a user, and further provides a call transfer key, a hang-up key, a record key, a call pause key, a mute key, a dial key, and a speaker key. An icon of the call transfer key is displayed as an icon corresponding to the tablet computer indicating that the current call is answered on the tablet computer. In a case that the tablet computer receives the second call transfer indication message, the tablet computer may send data of the current call to the notebook computer and display an interface before the call. As shown in a tablet computer interface b in FIG. 17, the interface displays a prompt box indicating that "the call is transferred to a notebook computer to be answered".

Optionally, in a scenario in which the current call is answered on the notebook computer, a user may further perform an operation on the notebook computer to transfer the current call to another terminal device.

Scenario 1: A call is transferred from a notebook computer to a mobile phone.

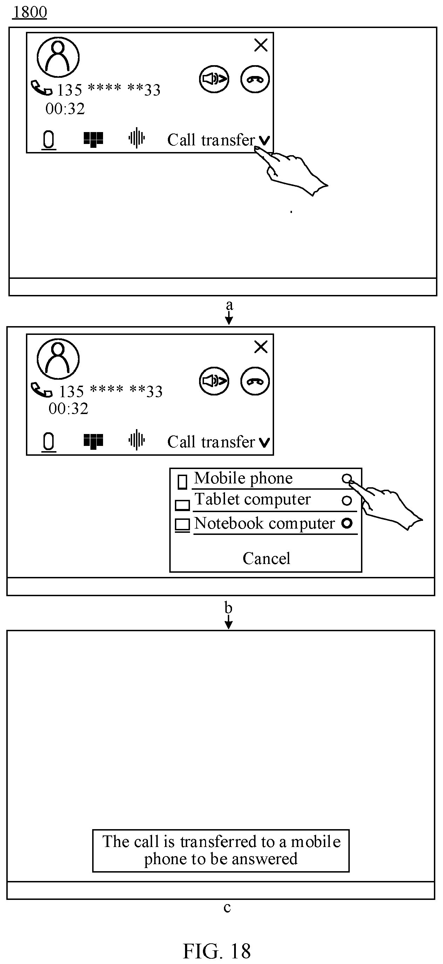

FIG. 18 shows another notebook computer interface 1800 for a call transfer. The current call is answered on the notebook computer, and the notebook computer may display a call interface. As shown in a notebook computer interface a in FIG. 18, the interface displays a contact and a call state of the current call for a user, and further provides a call transfer key, a hang-up key, a record key, a call pause key, a mute key, a dial key, and a speaker key.

As shown in the notebook computer interface a in FIG. 18, a user may click the call transfer key, and the notebook computer acquires, in response to a user's click operation on the call transfer key, an instruction for displaying a candidate device list, and displays the candidate device list in response to the instruction. As shown in a notebook computer interface b in FIG. 18, the candidate device list displays a mobile phone and a tablet computer that are located in a same local area network and log in with a same user account with the notebook computer, and currently, the notebook computer is in a selected state indicating that the current call is answered on the notebook computer.

As shown in the notebook computer interface b in FIG. 18, a user may click a choosing key for the mobile phone, and the notebook computer sends a first call transfer indication message to the mobile phone and displays an interface before the call, in response to a user's click operation on the choosing key for the mobile phone. As shown in a notebook computer interface c in FIG. 18, the interface further displays a prompt box indicating that "the user is transferred to a mobile phone to be answered".

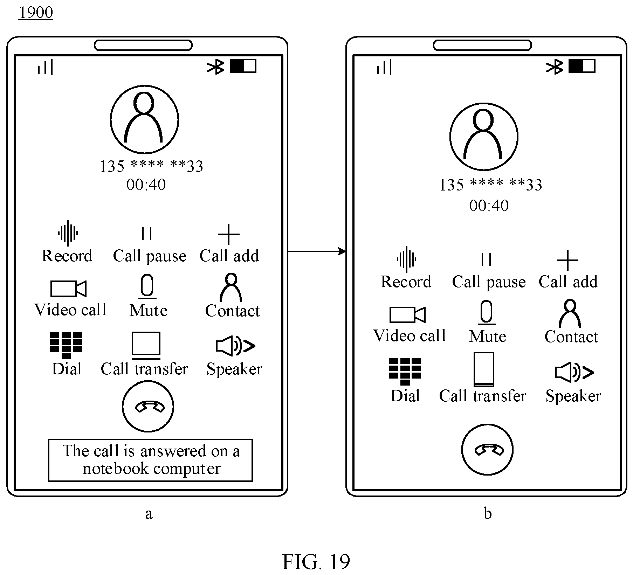

Correspondingly, when receiving the first call transfer indication message from the notebook computer, the mobile phone may answer the current call. FIG. 19 shows another mobile phone interface 1900 for a call transfer. When the current call is answered on the notebook computer, the mobile phone may synchronously display a call interface. As shown in a mobile phone interface a in FIG. 19, the interface displays a contact and a call state of the current call for a user, and further provides a call transfer key, a hang-up key, a record key, a call pause key, a call add key, a video call key, a mute key, a contact key, a dial key, and a speaker key. An icon of the call transfer key is displayed as an icon corresponding to the notebook computer indicating that the current call is answered on the notebook computer mobile phone. **In** addition, the interface may further display a prompt bar indicating that "the call is answered on a notebook computer". When the notebook computer sends the first call transfer indication message to the mobile phone, the mobile phone may answer the current call and display another call interface. As shown in a mobile phone interface b in FIG. 19, the interface displays, as the mobile phone interface a in FIG. 19 does, a contact and a call state of the current call for a user, and further provides a call transfer key, a hang-up key, a record key, a call pause key, a call add key, a video call key, a mute key, a contact key, a dial key, and a speaker key. However, an icon of the call transfer key in the interface is displayed as an icon of the mobile phone indicating that the current call is transferred to the mobile phone to be answered.

Scenario 2: A call is transferred from a notebook computer to a tablet computer.

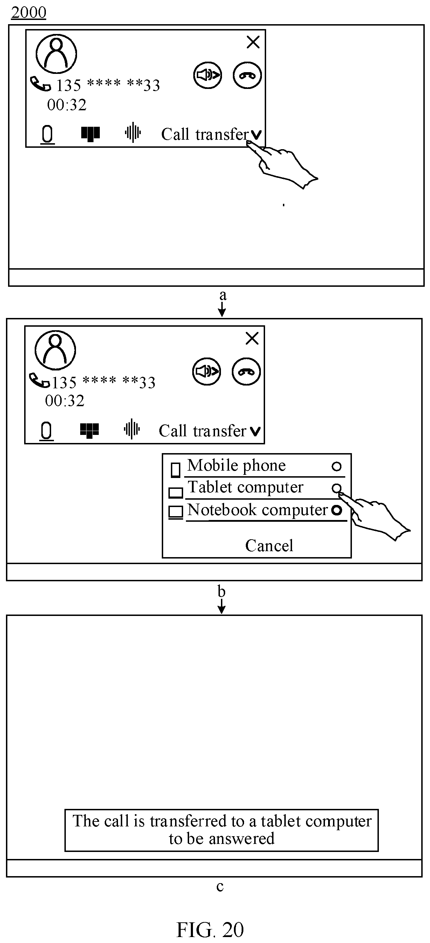

FIG. 20 shows another notebook computer interface 2000 for a call transfer. The current call is answered on the notebook computer, and the notebook computer may display a call interface. As shown in a notebook computer interface a in FIG. 20, the interface displays a contact and a call state of the current call for a user, and further provides a call transfer key, a hang-up key, a record key, a call pause key, a mute key, a dial key, and a speaker key.

As shown in the notebook computer interface a in FIG. 20, a user may click the call transfer key, and the notebook computer acquires, in response to a user's click operation on the call transfer key, an instruction for displaying a candidate device list, and displays the candidate device list in response to the instruction. As shown in a notebook computer interface b in FIG. 20, the candidate device list displays a mobile phone and a tablet computer that are located in a same local area network and log in with a same user account with the notebook computer, and currently, the notebook computer is in a selected state indicating that the current call is answered on the notebook computer.

As shown in the notebook computer interface b in FIG. 20, a user may click a choosing key for the tablet computer, and the notebook computer sends a first call transfer indication message to the tablet computer and displays an interface before the call, in response to a user's click operation on the choosing key for the tablet computer. As shown in a notebook computer interface c in FIG. 20, the interface further displays a prompt box indicating that "the call is transferred to a tablet computer to be answered".

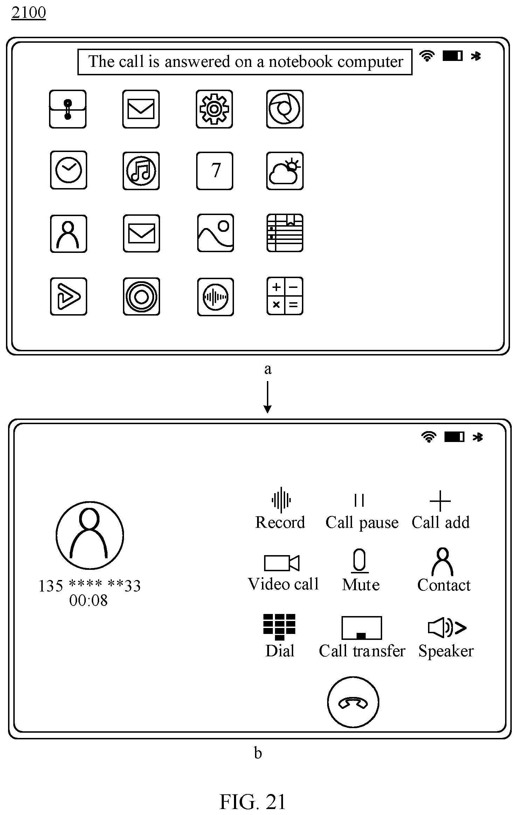

Correspondingly, when receiving the first call transfer indication message from the notebook computer, the tablet computer may answer the current call. FIG. 21 shows another tablet computer interface 2100 for a call transfer. When the current call is answered on the notebook computer, the tablet computer may display a call prompt on a current interface. As shown in a tablet computer interface a in FIG. 21, the interface is a desktop of the tablet computer, and the interface displays a prompt bar indicating that "the call is answered on a notebook computer". When the notebook computer sends the first call transfer indication message to the tablet computer, the tablet computer may answer the current call and display a call interface. As shown in a mobile phone interface b in FIG. 21, the interface displays a contact and a call state of the current call for a user, and further provides a call transfer key, a hang-up key, a record key, a call pause key, a call add key, a video call key, a mute key, a contact key, a dial key, and a speaker key. An icon of the call transfer key in the interface is displayed as an icon of the tablet computer indicating that the current call is transferred to the tablet computer to be answered.

Optionally, When the current call is answered on the notebook computer or the tablet computer, if the mobile phone detects a user's operation (such as an operation of turning on a screen of the mobile phone), it may indicate that the user intends to transfer the current call back to the mobile phone to be answered, and the mobile phone may directly display the foregoing candidate device list, thereby making it convenient for the user to efficiently and simply transfer the current call to the mobile phone to be answered.

Optionally, the call transfer key in the foregoing embodiment is an independent function key, and in this application, the call transfer key may be further reused with other function keys of the foregoing terminal device.

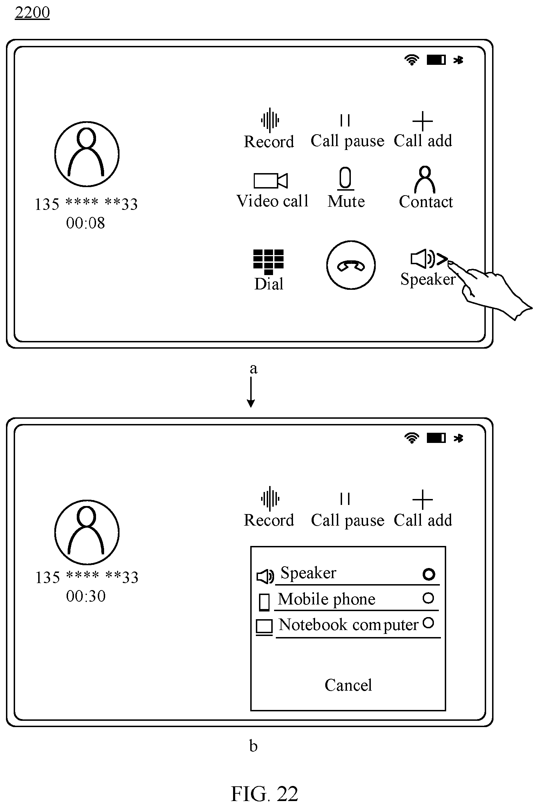

FIG. 22 shows another tablet computer interface 2200 for a call transfer. The current call is answered on the tablet computer, and the tablet computer may display a call interface. As shown in a tablet computer interface a in FIG. 22, the interface displays a contact and a call state of the current call for a user, and further provides a hang-up key, a record key, a call pause key, a mute key, a call add key, a video call key, a contact key, a dial key, and a speaker key.

As shown in the tablet computer interface a in FIG. 22, a user may click the speaker key, and the tablet computer acquires, in response to a user's click operation on the speaker key, an instruction for displaying a candidate device list, and displays the candidate device list in response to the instruction. As shown in a tablet computer interface b in FIG. 22, the candidate device list displays a mobile phone and a notebook computer that are located in a same local area network and log in with a same user account with the tablet computer, and currently, a speaker is in a selected state indicating that the current call is answered on the tablet computer.

As shown in the tablet computer interface b in FIG. 22, a user may click a choosing key (which is not shown in the diagram) for the mobile phone or the notebook computer, to transfer the current call answered on the tablet computer to the mobile phone or the notebook computer to be answered. For specific details, reference may be made to the foregoing embodiments. To avoid repetition, details are not described herein again.

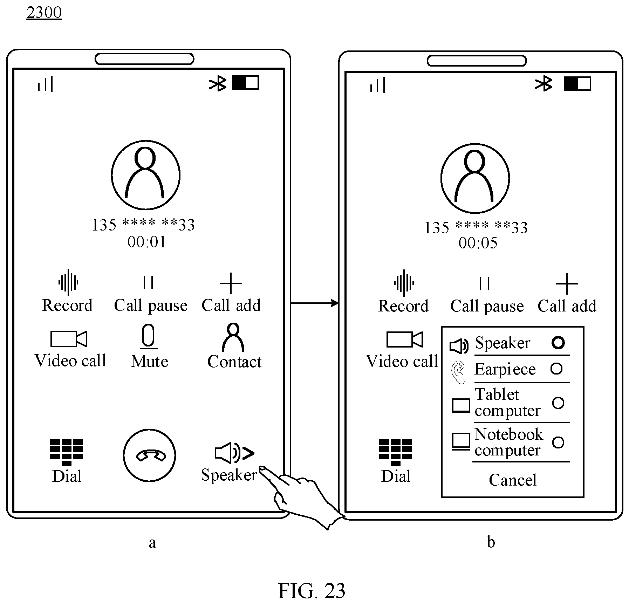

FIG. 23 shows another mobile phone interface 2300 for a call transfer. The current call is answered on the mobile phone, and the mobile phone may display a call interface. As shown in a tablet computer interface a in FIG. 23, the interface displays a contact and a call state of the current call for a user, and further provides a hang-up key, a record key, a call pause key, a mute key, a video call key, a call add key, a contact key, a dial key, and a speaker key.

As shown in the mobile phone a in FIG. 23, a user may click the speaker key, and the tablet computer acquires, in response to a user's click operation on the speaker key, an instruction for displaying a candidate device list, and displays the candidate device list in response to the instruction. As shown in a tablet computer interface b in FIG. 23, the candidate device list displays an earpiece, and a notebook computer and a tablet computer that are located in a same local area network and log in with a same user account with the mobile phone, and currently, a speaker is in a selected state indicating that the current call is answered on the mobile phone by using the speaker. As shown in a mobile phone b in FIG. 23, a user may click a choosing key (which is not shown in the diagram) for the mobile phone or the notebook computer, to transfer the current call answered on the tablet computer to the mobile phone or the notebook computer to be answered. Same as above, to avoid repetition, details are not described herein again.

Optionally, a user may click a key for the earpiece to answer the call by using the earpiece of the mobile phone.

It should be understood that, in a case there is no terminal device that is connected to a same local area network and logs in with a same user account with the mobile phone, the call is answered by using the earpiece of the mobile phone by default. If a user clicks the speaker key, the call may be answered by using the speaker of the mobile phone. Alternatively, a user may click the speaker key, and the mobile phone may display an answering manner list, where the list displays the earpiece and the speaker and currently the speaker is in a selected state indicating that the current call is answered by using the speaker of the mobile phone, or a user may click, according to a self-requirement, a choosing key for the earpiece in the answering manner list, to answer the call by using the earpiece of the mobile phone.

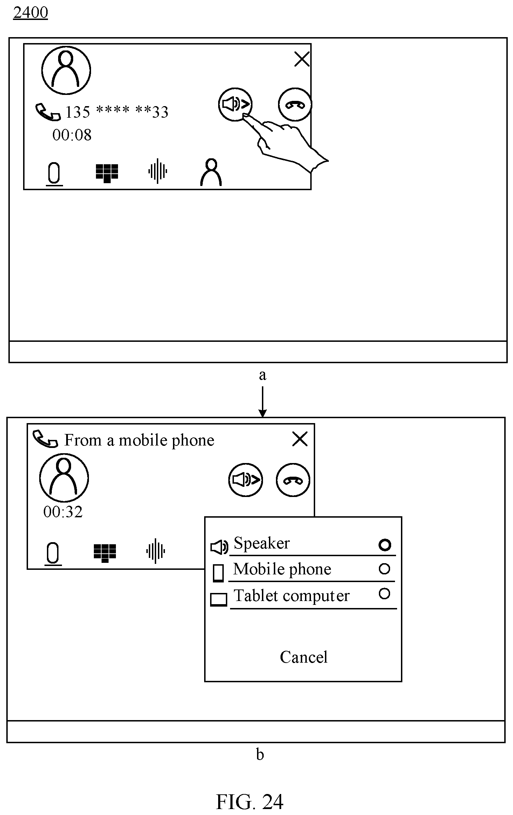

FIG. 24 shows another notebook computer interface 2400 for a call transfer. The current call is answered on the notebook computer, and the notebook may display a call interface. As shown in a notebook computer interface a in FIG. 24, the interface displays a contact and a call state of the current call for a user, and further provides a hang-up key, a record key, a mute key, a contact key, a dial key, and a speaker key.

As shown in the notebook computer interface a in FIG. 24, a user may click the speaker key, and the notebook computer acquires, in response to a user's click operation on the speaker key, an instruction for displaying a candidate device list, and displays the candidate device list in response to the instruction. As shown in a notebook computer interface b in FIG. 24, the candidate device list displays a mobile phone and a tablet computer that are located in a same local area network and log in with a same user account with the notebook computer, and currently, a speaker is in a selected state indicating that the current call is answered on the notebook computer.

As shown in the notebook computer interface b in FIG. 24, a user may click a choosing key (which is not shown in the diagram) for the mobile phone or the tablet computer, to transfer the current call answered on the notebook computer to the mobile phone or the tablet computer to be answered. Same as above, to avoid repetition, details are not described herein again.

It should be understood that all the foregoing embodiments may also be coupled with each other. This is not limited in this application. **In** addition, sequence numbers of the foregoing processes do not mean execution sequences. The execution sequences of the processes should be determined according to functions and internal logic of the processes, and should not be construed as any limitation on the implementation processes of the embodiments of this application.

**In** the embodiments provided in this application, the method provided in the embodiments of this application is described from a perspective of the second auxiliary terminal device used as an execution subject. To implement all functions in the method provided in the embodiments of this application, the second auxiliary terminal device may include a hardware structure and/or a software module, and implement all the functions in a manner of a hardware structure, a software module, or a hardware structure combined with a software module. Whether one of the functions is executed in a mode of a hardware structure, a software structure, or a hardware structure plus a software structure depends on particular applications and design constraint conditions of the technical solutions.

In the several embodiments provided in the present disclosure, it should be understood that the disclosed system, apparatus, and method may be implemented in other manners. For example, the described apparatus embodiments are only exemplary. For example, the division of the units is only a logical function division and may be other divisions during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatus or units may be implemented in electronic, mechanical, or other forms.

The units described as separate parts may or may not be physically separate. Parts displayed as units may or may not be physical units, and may be located in one position, or may be distributed on a plurality of network units. Some or all of the units may be selected according to an actual requirement to achieve the objectives of the solutions in the embodiments.

In addition, functional units in the embodiments of this application may be integrated into one processing unit, or each of the units may exist alone physically, or two or more units are integrated into one unit.

When the function is implemented in the form of a software functional unit and sold or used as an independent product, the function may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The storage medium includes: any medium that can store program code, such as a USB flash drive, a removable hard disk, a read-only memory (read-only memory, ROM), a random access memory (random access memory, RAM), a magnetic disk, a compact disc, or the like.

The foregoing descriptions are merely specific implementations of this application, but are not intended to limit the protection scope of this application. The protection scope of this application shall be subject to the protection scope of the claims.

## Claims

1. A call transfer method, applied to a system comprising a main terminal device, a first auxiliary terminal device, wherein the first auxiliary terminal device is a tablet, a watch, a personal computer, a stereo, a vehicle-mounted terminal device or a large screen, and a second auxiliary terminal device, the main terminal device, the first auxiliary terminal device, and the second auxiliary terminal device are connected to a same local area network and log in with a same user account, and the method comprises:
displaying (S401), by the first auxiliary terminal device, a first window, wherein the first window is used to display a contact and a call state of a current call, the first window is a displayed window corresponding to a case that the current call is in an answered state, and the first window is used to display a candidate device list in response to a user clicking a call transfer key, wherein the candidate device list displays the main terminal device and the second auxiliary terminal device as candidates;
receiving, by the first auxiliary terminal device, a user's operation of choosing the main terminal device or the second auxiliary terminal device as a respective candidate from the candidate list displayed in the first window; and
in response to the user's operation of choosing the main terminal device as the respective candidate, sending, by the first auxiliary terminal device, a first call transfer indication message to the main terminal device; and
in response to the user's operation of choosing the second auxiliary terminal device as the respective candidate, sending, by the first auxiliary terminal device, a first call transfer indication message to the second auxiliary terminal device;
wherein the first call transfer indication message is used to instruct to transfer the current call, wherein before the displaying (S401), by the first auxiliary terminal device, a first window, the method further comprises:
displaying, by the first auxiliary terminal device, a second window, wherein the second window is a displayed window corresponding to a case that the current call is in an unanswered state, and the second window comprises an answer key and a hang-up key; and
answering, by the first auxiliary terminal device, the current call, and updating the displayed window from the second window to the first window, in response to a user's operation on the answer key.

2. A terminal device, comprising a processor and a memory, wherein the memory is configured to store a code instruction, and the processor is configured to execute the code instruction, to perform the method according to claim 1.

3. A computer-readable storage medium, configured to store a computer program, wherein the computer program comprises an instruction used to perform the method according to claim 1.

4. A computer program product, comprising computer program code, wherein the computer program code, when run on a computer, causes the computer to perform the method according to claim 1.

## Patentansprüche

1. Ein Verfahren zur Anrufübertragung, angewendet auf ein System, das ein Hauptendgerät, ein erstes Hilfsendgerät, wobei das erste Hilfsendgerät ein Tablet, eine Uhr, ein Personal Computer, eine Stereoanlage, ein fahrzeugintegriertes Endgerät oder ein Großbildschirm ist, und ein zweites Hilfsendgerät umfasst, wobei das Hauptendgerät, das erste Hilfsendgerät und das zweite Hilfsendgerät mit demselben lokalen Netzwerk verbunden sind und mit demselben Benutzerkonto angemeldet sind, und das Verfahren umfasst:
Anzeige (S401) eines ersten Fensters durch das erste Hilfsendgerät, wobei das erste Fenster verwendet wird, um einen Kontakt und einen Anrufstatus eines aktuellen Anrufs anzuzeigen, das erste Fenster dem Fall entspricht, dass sich der aktuelle Anruf im angenommenen Zustand befindet, und das erste Fenster so verwendet wird, dass es eine Liste von Kandidatengeräten als Reaktion auf das Klicken der Anrufübertragungstaste durch den Benutzer anzeigt, wobei in der Kandidatengeräteliste das Hauptendgerät und das zweite Hilfsendgerät als Kandidaten dargestellt werden;
Empfangen einer Bedienung des Benutzers durch das erste Hilfsendgerät, bei der das Hauptendgerät oder das zweite Hilfsendgerät als jeweiliger Kandidat aus der im ersten Fenster angezeigten Kandidatenliste ausgewählt wird; und
Als Reaktion auf die Benutzerwahl des Hauptendgeräts als jeweiligen Kandidaten sendet das erste Hilfsendgerät eine erste Anrufübertragungsanzeige an das Hauptendgerät; und
Als Reaktion auf die Benutzerwahl des zweiten Hilfsendgeräts als jeweiligen Kandidaten sendet das erste Hilfsendgerät eine erste Anrufübertragungsanzeige an das zweite Hilfsendgerät;
wobei die erste Anrufübertragungsanzeige dazu dient, eine Übertragung des aktuellen Anrufs anzuweisen, und wobei das Verfahren, vor der Anzeige (S401) des ersten Fensters durch das erste Hilfsendgerät, weiterhin Folgendes umfasst:
Anzeige eines zweiten Fensters durch das erste Hilfsendgerät, wobei das zweite Fenster dem Fall entspricht, dass sich der aktuelle Anruf im unbeantworteten Zustand befindet, und das zweite Fenster eine Annahmetaste und eine Auflegetaste enthält; und
Annahme des aktuellen Anrufs durch das erste Hilfsendgerät und Aktualisierung des angezeigten Fensters vom zweiten Fenster auf das erste Fenster als Reaktion auf die Bedienung der Annahmetaste durch den Benutzer.

2. Ein Endgerät, umfassend einen Prozessor und einen Speicher, wobei der Speicher dazu konfiguriert ist, eine Codeanweisung zu speichern und der Prozessor dazu konfiguriert ist, die Codeanweisung auszuführen, um das Verfahren gemäß Anspruch 1 auszuführen.

3. Ein computerlesbares Speichermedium, das dazu eingerichtet ist, ein Computerprogramm zu speichern, wobei das Computerprogramm eine Anweisung enthält, die zur Durchführung des Verfahrens gemäß Anspruch 1 verwendet wird.

4. Ein Computerprogrammprodukt, das einen Computerprogrammcode umfasst, wobei der Computerprogrammcode, wenn er auf einem Computer ausgeführt wird, bewirkt, dass der Computer das Verfahren gemäß Anspruch 1 durchführt.

## Revendications

1. Procédé de transfert d'appel, appliqué à un système comprenant un terminal principal, un premier terminal auxiliaire, ledit premier terminal auxiliaire étant une tablette, une montre, un ordinateur personnel, une chaîne stéréo, un terminal embarqué dans un véhicule ou un grand écran, et un second terminal auxiliaire, le terminal principal, le premier terminal auxiliaire et le second terminal auxiliaire étant connectés au même réseau local et se connectant avec un même compte utilisateur, ledit procédé comprenant :
l'affichage (S401), par le premier terminal auxiliaire, d'une première fenêtre, ladite première fenêtre étant destinée à afficher un contact et l'état d'appel en cours, la première fenêtre étant une fenêtre affichée correspondant au cas où l'appel en cours est en état de réponse, et la première fenêtre servant à afficher une liste d'appareils candidats en réponse à un clic utilisateur sur une touche de transfert d'appel, ladite liste d'appareils candidats affichant le terminal principal et le second terminal auxiliaire en tant que candidats ;
la réception, par le premier terminal auxiliaire, de l'opération de l'utilisateur qui choisit le terminal principal ou le second terminal auxiliaire parmi la liste des candidats affichée dans la première fenêtre ; et
en réponse à l'opération de l'utilisateur choisissant le terminal principal comme candidat, l'envoi, par le premier terminal auxiliaire, d'un premier message d'indication de transfert d'appel au terminal principal ; et
en réponse à l'opération de l'utilisateur choisissant le second terminal auxiliaire comme candidat, l'envoi, par le premier terminal auxiliaire, d'un premier message d'indication de transfert d'appel au second terminal auxiliaire ;
le premier message d'indication de transfert d'appel servant à requérir le transfert de l'appel en cours, et, avant l'affichage (S401), par le premier terminal auxiliaire, d'une première fenêtre, le procédé comprenant en outre :
l'affichage, par le premier terminal auxiliaire, d'une seconde fenêtre, ladite seconde fenêtre étant une fenêtre affichée correspondant au cas où l'appel en cours n'a pas été répondu, et la seconde fenêtre comprenant une touche de réponse et une touche de raccrochage ; et
la réponse, par le premier terminal auxiliaire, à l'appel en cours, et la mise à jour de la fenêtre affichée de la seconde fenêtre à la première fenêtre, en réponse à une opération de l'utilisateur sur la touche de réponse.

2. Terminal, comprenant un processeur et une mémoire, la mémoire étant configurée pour stocker une instruction de code, et le processeur étant configuré pour exécuter ladite instruction de code afin de mettre en œuvre le procédé selon la revendication 1.

3. Un support de stockage lisible par ordinateur, configuré pour stocker un programme informatique, ledit programme informatique comprenant une instruction utilisée pour exécuter le procédé selon la revendication 1.

4. Un produit programme d'ordinateur, comprenant un code de programme informatique, ledit code de programme informatique, lorsqu'il est exécuté sur un ordinateur, amène l'ordinateur à effectuer le procédé selon la revendication 1.
